(19) Europäisches Patentamt
European Patent Office
Office européen des brevets

(11) **EP 3 660 748 A1**

(12) **DEMANDE DE BREVET EUROPEEN**

(43) Date de publication:
**03.06.2020 Bulletin 2020/23**

(51) Int Cl.:
**G06N 3/063** *(2006.01)*     **G06N 3/04** *(2006.01)*
**G06N 3/08** *(2006.01)*

(21) Numéro de dépôt: **19211416.3**

(22) Date de dépôt: **26.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.11.2018 FR 1872036**

(71) Demandeur: **STMicroelectronics (Rousset) SAS**
**13790 Rousset (FR)**

(72) Inventeurs:
• **DEMAJ, Pierre**
**06200 Nice (FR)**
• **FOLLIOT, Laurent**
**06620 Gourdon (FR)**

(74) Mandataire: **Casalonga**
**Casalonga & Partners**
**Bayerstraße 71/73**
**80335 München (DE)**

(54) **PROCÉDÉ D'ANALYSE D'UN JEU DE PARAMÈTRES D'UN RÉSEAU DE NEURONES EN VUE D'OBTENIR UNE AMÉLIORATION TECHNIQUE, PAR EXEMPLE UN GAIN EN MÉMOIRE**

(57) Procédé, comprenant une analyse d'un jeu de paramètres initiaux définissant un réseau de neurones initial (RN), le réseau de neurones (RN) étant destiné à être mis en œuvre par un processeur (PROC), ladite analyse comportant, une réduction de la taille mémoire initiale d'au moins un paramètre initial de façon à obtenir un jeu de paramètres modifiés définissant un réseau de neurones modifié par rapport au réseau initial, le procédé comprenant en outre une mise en œuvre par ledit système (SYS), du réseau de neurones initial (RN) et du réseau de neurones modifié (RNM) en utilisant un jeu de données d'entrée de test (DT), une élaboration d'un facteur de qualité pour le réseau de neurones initial (RN) et le réseau de neurones modifié (RNM) en utilisant ledit au moins un jeu de données d'entrée de test (DT) et une comparaison entre les deux facteurs de qualité.

[Fig.1]

**Description**

Des modes de mise en oeuvre et de réalisation de l'invention concernent l'apprentissage approfondi (en anglais « deep learning ») et plus particulièrement les réseaux de neurones profonds.

Les réseaux de neurones sont massivement utilisés pour résoudre divers problèmes statistiques notamment le problème de la classification de données.

Après une phase d'apprentissage automatique généralement supervisée, c'est-à-dire sur une base de données de référence déjà classifiées, un réseau de neurones « apprend » et devient tout seul capable d'appliquer la même classification à des données inconnues.

On peut citer les réseaux de neurones à convolution, ou CNN (« Convolutional Neural Networks » en anglais) qui représentent un type de réseau de neurones dans lequel le motif de connexion entre les neurones est inspiré par le cortex visuel des animaux. Ils permettent avec efficacité la reconnaissance d'objets ou de personnes dans des images ou des vidéos.

L'architecture d'un réseau de neurones comprend généralement une succession de couches dont chacune prend ses entrées sur les sorties de la couche précédente.

Les données de sortie (« features » en anglais) sont stockées dans des zones mémoires ayant une taille préalablement définie.

Les données d'entrée sont multipliées par au moins un poids d'une valeur donnée pour chaque couche.

Par « poids », qui est un terme dont la signification dans le domaine des réseaux de neurones est bien connue de l'homme du métier, on entend des paramètres de neurones configurables pour obtenir de bonnes données de sortie.

Ce poids est déterminé en entraînant le réseau de neurones sur une base de données d'entraînement. Plus précisément, le réseau de neurones traite par exemple une image extraite de ladite base de données et en sortie il fait une prédiction, c'est-à-dire à quelle classe l'image pourrait appartenir sachant que la classe de l'image est préalablement connue.

En fonction de la véracité de ce résultat, on met à jour tous les poids du réseau de neurones selon un algorithme qui s'appelle la rétropropagation du gradient.

Généralement, les données de sortie et les poids de chaque couche sont représentés en virgule flottante par exemple sur 32 bits, ce qui permet d'avoir un réseau de neurones avec de meilleures performances quant aux prédictions.

Les données de sortie et les poids de chaque couche peuvent également être représentés en virgule fixe par exemple sur 16 ou 8 bits.

Par « virgule flottante » on entend une représentation d'un nombre par un signe, une mantisse et un exposant.

Par « virgule fixe » on entend une représentation d'un nombre avec un nombre fixe de chiffres après la virgule.

Les zones mémoires allouées pour les représentations en virgule fixe sont par conséquent plus petites que celles allouées pour les représentations en virgule flottante.

Généralement, plus la taille mémoire est petite, plus le réseau de neurones perd en performances par rapport aux prédictions car on dégrade l'exactitude des calculs.

Aujourd'hui les réseaux de neurones sont de plus en plus complexes et requièrent une grande puissance de calcul.

L'instruction par seconde (« Instructions Per Second » en anglais) est une unité de mesure de la performance d'un système par exemple un microprocesseur.

Pour un microprocesseur donné, plus la configuration du réseau de neurones est complexe, plus le temps nécessaire pour réaliser une inférence c'est-à-dire l'exécution de toutes les couches du réseau de neurones augmente.

De plus, les microprocesseurs des systèmes stockant un réseau de neurones sont généralement optimisés pour des données représentées en virgule fixe par exemple sur 16 ou 8 bits.

Il existe donc un besoin de pouvoir, dans la mesure du possible, offrir de mettre en oeuvre des réseaux de neurones complexes sur un microprocesseur tout en ne dégradant pas, ou à tout le moins dans une mesure acceptable, les performances.

Il est ainsi en particulier proposé d'offrir à un utilisateur d'un réseau de neurones la capacité de pouvoir décider s'il est possible, en fonction d'un critère préférentiellement choisi par cet utilisateur, de modifier ou d'ajuster certains paramètres du réseau de neurones, par exemple la taille des poids et/ou des données de sortie, pour obtenir par exemple un gain en terme de mémoire ou un gain en performance, par exemple un gain en temps de traitement, au niveau du processeur tout en gardant de bonnes performances pour le réseau de neurones ainsi modifié.

Il est en particulier proposé de pouvoir déterminer s'il est possible de réduire la charge de calcul par exemple d'un microprocesseur traitant les données reçues ou créées par un réseau de neurones en passant d'une représentation de données en virgule flottante à une représentation en virgule fixe tout en gardant un réseau de neurones performant.

Selon un aspect, il est proposé un procédé comprenant une analyse d'un jeu de paramètres initiaux définissant un réseau de neurones multicouches initial, le réseau de neurones étant destiné à être mis en oeuvre par un système comportant une unité de calcul, par exemple un processeur couplée à un ensemble de mémoires, ladite analyse comportant, en particulier en vue d'obtenir une amélioration technique comportant par exemple au moins une amélioration de la durée de traitement de l'unité de calcul et/ou un gain de taille mémoire, une réduction ou une tentative de réduction de la taille mémoire initiale d'au moins un paramètre initial de façon à obtenir un jeu de paramètres modifiés définissant un réseau de neurones modifié par rapport au réseau initial.

Cette réduction ou tentative de réduction est avantageusement conditionnée à la satisfaction ou non d'un critère, par exemple choisi.

Selon un mode de mise en oeuvre, le procédé comprend en outre une mise en oeuvre par ledit système, du réseau de neurones initial et du réseau de neurones modifié en utilisant un jeu de données d'entrée de test, une élaboration d'un facteur de qualité pour le réseau de neurones initial et d'un facteur de qualité pour le réseau de neurones modifié en utilisant au moins ledit jeu de données d'entrée de test, une comparaison entre les deux facteurs de qualité et une acceptation ou un refus de ladite réduction de la taille mémoire initiale dudit au moins un paramètre en fonction du résultat de ladite comparaison au regard de la satisfaction ou non du critère choisi.

Ce critère est par exemple choisi par l'utilisateur du réseau de neurones, en fonction par exemple de l'application envisagée.

Le type d'amélioration technique peut être également avantageusement choisi, par exemple par l'utilisateur, notamment en fonction de l'application envisagée, des contraintes matérielles et budgétaires.

Ce choix peut alors conditionner sur quel type de paramètre initial peut porter ladite réduction de ladite taille mémoire.

Par « jeu de paramètres initiaux » on entend des paramètres relatifs à la configuration du réseau de neurones, par exemple les poids de chaque couche, son type et la taille à allouer pour les données de sortie de chaque couche.

Chaque paramètre ayant une taille mémoire définie, un réseau de neurones modifié est un réseau où la taille mémoire d'un des paramètres initiaux ou de tous a été modifiée par exemple en réduisant ladite taille mémoire.

En fonction de l'amélioration technique recherchée (gain en mémoire et/ou gain en performance (en particulier en temps de traitement) du processeur par exemple), on pourra par exemple chercher à réduire la taille mémoire initiale allouée à une ou à plusieurs couches du réseau de neurones et/ou réduire la taille mémoire initiale de certains au moins des poids de certaines au moins des couches modifiant la représentation des données (virgule flottante à fixe).

Pour vérifier si une modification du jeu de paramètres initiaux satisfait le critère choisi, on met à l'entrée du réseau de neurones modifié un jeu de données d'entrée de test. Ce jeu de données sert à évaluer la performance du réseau de neurones en calculant un facteur de qualité.

On calcule le facteur de qualité pour le réseau initial et le facteur de qualité pour le réseau modifié et on les compare.

Ce facteur de qualité peut être par exemple un facteur de précision ou un facteur de bruit sans que ces exemples ne soient limitatifs.

Si les deux facteurs de qualité sont identiques à une tolérance prés, par exemple quelques pourcents, choisie par l'utilisateur, alors on considère que le critère est satisfait, c'est-à-dire que le réseau de neurones modifié permet par exemple un gain en mémoire tout en conservant sensiblement les mêmes performances que le réseau de neurones initial.

Si les deux facteurs de qualité ne sont pas identiques à ladite tolérance près, alors on considère que le critère n'est pas satisfait, c'est-à-dire que le gain en mémoire par exemple, obtenu avec le réseau de neurones modifié ne permet pas d'obtenir les mêmes performances que celles obtenues avec le réseau de neurones initial.

Si le nouveau réseau de neurones modifié ne satisfait pas audit critère, le système conserve le réseau de neurones initial et efface le nouveau.

Si le nouveau réseau de neurones modifié satisfait audit critère, le nouveau réseau de neurones peut par exemple remplacer le réseau de neurones initial.

Selon un mode de mise en oeuvre, chaque couche du réseau de neurones initial comprend au moins un poids initial appartenant au jeu de paramètres initiaux et ayant une taille mémoire initiale.

Ladite analyse comprend une première réduction de la taille mémoire initiale dudit au moins un poids initial à une première taille mémoire pour toutes les couches, et en cas de refus de la première réduction après ladite comparaison des facteurs de qualité, une deuxième réduction dudit au moins un poids à une deuxième taille mémoire pour toutes les couches, la deuxième taille étant supérieure à la première taille, et en cas de refus de la deuxième réduction après ladite comparaison des facteurs de qualité, une conservation de la taille mémoire initiale des poids initiaux du réseau de neurones initial.

La taille mémoire initiale dudit au moins un poids est allouée dans une mémoire non-volatile par exemple une mémoire ROM pour (« Read-Only Memory » en anglais).

La taille mémoire initiale dudit au moins un poids est par exemple 32 bits. Une première réduction de la taille mémoire initiale dudit au moins un poids est par exemple une réduction de 24 bits. Ledit au moins un poids a donc une taille mémoire modifiée de 8 bits.

L'amélioration technique escomptée est par exemple un gain en mémoire.

Etant donné que ledit au moins un poids perd en précision, il est avantageux de vérifier si le réseau de neurones modifié satisfait audit critère. Pour cela, on effectue la comparaison des facteurs de qualité.

S'il y a refus, on réduit moins fortement la taille mémoire initiale dudit au moins un poids de sorte à avoir une taille mémoire de 16 bits. On effectue de nouveau la comparaison entre un réseau de neurones modifié dans lequel ledit au moins un poids a une taille mémoire de 16 bits avec le réseau de neurones initial dans lequel ledit au moins un poids a sa taille mémoire initiale, c'est-à-dire 32 bits.

S'il y a refus, on garde la taille mémoire initiale c'est-à-dire ici 32 bits.

On peut également avoir un réseau de neurones initial dans lequel ledit au moins un poids a une taille initiale de 8 bits. Dans ce cas, on peut par exemple réaliser une première réduction de 6 bits pour avoir une taille mémoire de 2 bits et effectuer la comparaison des facteurs de qualité. S'il y a refus, on peut réaliser une deuxième réduction moindre, par exemple de 4 bits, c'est-à-dire, avoir une taille mémoire finale de 4 bits et effectuer la comparaison des facteurs de qualité et s'il y a refus, on conserve la taille mémoire initiale de 8 bits.

Selon un autre mode de mise en oeuvre possible, chaque couche du réseau de neurones initial comprend une zone mémoire initiale destinée à stocker des données de sortie, appartenant au jeu de paramètres initiaux et ayant une taille mémoire initiale.

Le procédé comprend, si la taille mémoire dudit au moins un poids initial a été réduite, une première réduction de la taille mémoire initiale de toutes les zones mémoires initiales à ladite première taille, et en cas de refus de la première réduction après ladite comparaison des facteurs de qualité, une deuxième réduction de la taille mémoire initiale de toutes les zones mémoires initiales à la deuxième taille, et en cas de refus de la deuxième réduction après ladite comparaison, une conservation de la taille mémoire initiale des zones mémoires initiales du réseau.

La taille mémoire initiale de la zone mémoire est allouée dans une mémoire volatile par exemple une mémoire RAM pour (« Random Access Memory » en anglais).

La taille mémoire initiale de la zone mémoire est par exemple 32 bits. Dans ce cas, si la taille mémoire dudit au moins un poids a été réduite, on réalise une première réduction de la taille mémoire initiale de la zone mémoire de 24 bits. La zone mémoire a donc une taille mémoire de 8 bits.

Etant donné que la zone mémoire, ainsi réduite perd en précision, il est avantageux de vérifier si le réseau de neurones modifié satisfait audit critère. Pour cela, on effectue la comparaison des facteurs de qualité.

S'il y a refus, on réduit moins fortement la taille mémoire initiale de la zone mémoire de sorte à avoir 16 bits. On effectue la comparaison entre un réseau de neurones modifié dans lequel la zone mémoire a une taille mémoire de 16 bits avec le réseau de neurones initial dans lequel la zone mémoire a une taille mémoire initiale, c'est-à-dire 32 bits.

S'il y a refus, on garde la taille mémoire initiale c'est-à-dire ici 32 bits.

On peut également avoir un réseau de neurones initial dans lequel la zone mémoire a une taille initiale de 8 bits. Dans ce cas, on peut par exemple réaliser une première réduction de 6 bits pour avoir une taille mémoire de 2 bits et effectuer la comparaison. S'il y a refus, on peut réaliser une deuxième réduction de 4 bits, c'est-à-dire, avoir une taille mémoire de 4 bits et effectuer la comparaison et s'il y a refus, on conserve la taille mémoire initiale 8 bits.

Selon un mode de mise en oeuvre, la deuxième taille est le double de la première taille.

Par exemple, si la taille mémoire initiale est de 32 bits, la première réduction permet d'obtenir une taille mémoire de 8 bits et une taille mémoire de 16 bits après la deuxième réduction.

Selon un mode de mise en oeuvre, à l'issue de ladite analyse, le jeu de paramètres modifiés du réseau de neurones modifié peut comprendre ledit au moins un poids ayant une taille mémoire réduite et toutes les zones mémoires initiales ayant une taille mémoire réduite.

Par exemple, si le jeu de paramètres initiaux du réseau de neurones initial comprend ledit au moins un poids ayant une taille mémoire initiale de 32 bits et les zones mémoires initiales ayant une taille mémoire initiale de 32 bits, le jeu de paramètres modifiés du réseau de neurones modifié comprend ledit au moins un poids ayant une taille mémoire de 8 ou 16 bits et les zones mémoires ayant une taille mémoire de 8 ou 16 bits.

Selon une autre possibilité, le jeu de paramètres modifiés du réseau de neurones modifié peut comprendre ledit au moins un poids ayant une taille mémoire réduite et toutes les zones mémoires initiales ayant leur taille mémoire initiale.

En d'autres termes, dans ce cas, la réduction de la taille mémoire dudit au moins un poids a été avantageuse, c'est-à-dire elle permet de rester proche des performances du réseau de neurones initial mais uniquement si l'on ne réduit pas la taille mémoire des zones mémoires initiales.

Selon un mode de mise en oeuvre, ledit au moins un facteur de qualité comprend un facteur de précision.

Le facteur de précision par exemple « Mean Average Précision » en anglais est une mesure d'évaluation du réseau de neurones. Cela permet d'obtenir la moyenne des pourcentages calculés pour chaque classe. Chaque pourcentage correspond au nombre de données qui ont été correctement prédites.

Un autre facteur de précision serait par exemple « Accuracy » qui est également une mesure d'évaluation du réseau de neurones. Il s'agit du ratio entre le nombre de classifications correctes sur le nombre de classifications exécutées. Plusieurs variantes existent et sont connues de l'homme du métier. Par exemple on peut évaluer le réseau de neurones pour une classe donnée.

Selon un mode de mise en oeuvre, ledit au moins un facteur de qualité comprend un facteur de bruit.

Par « facteur de bruit », dans le cadre du réseau de neurones, on peut citer l'erreur quadratique moyenne (« Mean Square Error » en anglais) qui permet de comparer, au niveau des couches du réseau de neurones, les données en sortie de chaque couche du réseau de neurones initial et du réseau de neurones modifié. Une autre variante serait de comparer les données en entrée de chaque couche. Cette comparaison peut être effectuée par exemple en testant les deux réseaux de neurones avec un jeu de test de données aléatoires en entrée des deux réseaux.

Selon une autre variante, chaque couche du réseau de neurones initial comprend au moins un poids initial appartenant au jeu de paramètres initiaux et ayant une taille mémoire initiale.

Ladite analyse comprend une première réduction de la taille mémoire dudit au moins un poids de ladite couche à une première taille mémoire, et en cas de refus de la première réduction après ladite comparaison des facteurs de qualité, une deuxième réduction de la taille mémoire initiale dudit au moins un poids initial de ladite couche à une deuxième taille mémoire supérieure à la première taille mémoire, et en cas de refus de la deuxième réduction après ladite comparaison, une conservation de la taille mémoire initiale dudit au moins un poids de la couche.

Chaque couche du réseau de neurones initial comprend une zone mémoire initiale ayant une taille mémoire initiale destinée à stocker des données de sortie, appartenant aux jeux de paramètres initiaux.

Ladite analyse comprend alors également une première réduction de la taille mémoire initiale de la zone mémoire initiale de la couche à ladite première taille, et en cas de refus de la première réduction après ladite comparaison, une deuxième réduction de la taille mémoire initiale de la zone mémoire initiale de la couche à la deuxième taille, et en cas de refus de la deuxième réduction après ladite comparaison, une conservation de la taille mémoire initiale de la zone mémoire initiale et de la taille mémoire initiale dudit au moins un poids initial de la couche.

Ici, on effectue la première et la deuxième réduction uniquement par couche.

Un réseau de neurones modifié peut ainsi par exemple comprendre un jeu de paramètres modifiés uniquement pour une seule couche.

Selon encore une autre variante, dans laquelle chaque couche du réseau de neurones initial comprend au moins un poids initial et une zone mémoire initiale destinée à stocker des données de sortie, appartenant au jeu de paramètres initiaux, ledit au moins un poids ayant une taille mémoire initiale égale à la taille mémoire initiale de la zone mémoire initiale, ladite analyse comprend une réduction de moitié de la taille mémoire initiale dudit au moins un poids initial de ladite couche, et en cas de refus de ladite réduction après ladite comparaison des facteurs de qualité, une conservation de la taille mémoire initiale dudit au moins un poids initial et une réduction de moitié de la taille mémoire initiale de la zone mémoire initiale, et en cas de refus de la réduction de taille mémoire de la zone mémoire initiale après ladite comparaison des facteurs de qualité, une conservation de la taille mémoire initiale de la zone mémoire initiale.

Selon encore une autre variante dans laquelle chaque couche du réseau de neurones initial comprend au moins un poids initial et une zone mémoire initiale destinée à stocker des données de sortie appartenant au jeu de paramètres initiaux, ledit au moins un poids ayant une taille mémoire initiale supérieure à la taille mémoire initiale de la zone mémoire initiale, ladite analyse comprend une réduction de la taille mémoire initiale dudit au moins un poids initial à la taille mémoire initiale de la zone mémoire initiale, et en cas de refus après ladite comparaison des facteurs de qualité une conservation de la taille mémoire initiale dudit au moins un poids.

Selon encore une autre variante dans laquelle chaque couche du réseau de neurones initial comprend au moins un poids initial et une zone mémoire initiale destinée à stocker des données de sortie, appartenant au jeu de paramètres initiaux, ledit au moins un poids initial ayant une taille mémoire initiale inférieure à la taille mémoire initiale de la zone mémoire initiale, ladite analyse comprend une réduction de la taille mémoire initiale de la zone mémoire initiale à la taille mémoire initiale dudit au moins un poids initial, et en cas de refus de la réduction après ladite comparaison des facteurs de qualité, une conservation de la taille mémoire initiale de la zone mémoire initiale.

Selon un mode de mise en oeuvre, ledit au moins un facteur de qualité comporte un facteur de précision.

Selon un mode de mise en oeuvre, ledit au moins un facteur de qualité comporte un facteur de bruit.

Selon un mode de mise en oeuvre, le procédé comprend en outre un calcul d'un score pour chaque couche du réseau de neurones initial en fonction de l'amélioration technique recherchée et une sélection des couches ayant un score au-dessus d'un seuil.

La réduction de la taille mémoire d'une zone mémoire et/ou de la taille mémoire des poids d'une couche peut potentiellement conduire à l'amélioration recherchée.

Pour sélectionner ces couches potentielles, un score est calculé pour chaque couche. Si le score calculé est inférieur à un seuil par exemple 0, cela veut dire que ladite couche ne conduit pas à l'amélioration recherchée après réduction de la taille mémoire de sa zone mémoire et/ou de la taille mémoire de ses poids. Il ne serait pas utile de réaliser ladite réduction sur cette couche.

On peut également réaliser la réduction sur ladite couche mais la couche ne sera pas prioritaire par rapport aux couches potentielles.

Les couches du réseau de neurones sont classifiées en fonction du score obtenu.

Selon un mode de mise en oeuvre, chaque couche sélectionnée du réseau de neurones initial comprend au moins un poids initial ayant une taille mémoire initiale et une zone mémoire initiale destinée à stocker des données de sortie, ayant une taille mémoire initiale, ladite analyse comprenant une réduction de la taille mémoire initiale de la zone mémoire initiale et/ou dudit au moins un poids de la couche sélectionnée à une taille choisie, et en cas de refus de ladite réduction après ladite comparaison, une conservation de la taille mémoire initiale dudit au moins un poids initial et/ou de la zone mémoire initiale et un passage à la couche sélectionnée suivante.

Selon un mode de mise en oeuvre, l'amélioration technique recherchée est un gain en mémoire.

Selon un mode de mise en oeuvre, l'ensemble de mémoires du système comporte une mémoire volatile destinée à être allouée à la zone mémoire initiale de la couche sélectionnée et une mémoire non volatile destinée à stocker ledit au moins un poids de la couche sélectionnée, et en fonction d'un facteur de pondération, le gain en mémoire comprend un gain en mémoire volatile ou non-volatile ou un gain dans les deux mémoires, le gain en mémoire non-volatile correspondant à une réduction de la taille mémoire initiale dudit au moins un poids de la couche sélectionnée, le gain en mémoire volatile correspondant à une réduction de la taille mémoire initiale de la zone mémoire initiale de la couche sélectionnée.

Par exemple, si le gain en est recherché dans la mémoire volatile, il serait avantageux de réduire la taille mémoire initiale des zones mémoires de chaque couche sélectionnée.

Si le gain en mémoire est recherché dans la mémoire non volatile, il serait avantageux de réduire la taille mémoire initiale des poids de chaque couche.

Si un facteur de pondération est défini par exemple 0.5, cela confère la même importance au gain en mémoire volatile et en mémoire non volatile.

Selon un mode de mise en oeuvre, l'amélioration technique recherchée est un gain en durée de traitement.

Par « un gain en durée de traitement » on entend un gain en temps de traitement au niveau de l'unité de calcul.

Selon un mode de mise en oeuvre, ledit au moins un facteur de qualité comprend un facteur de précision.

Selon un mode de mise en oeuvre, ledit au moins un facteur de qualité comprend un facteur de bruit.

Selon un autre aspect, il est proposé un système comprenant une unité de calcul, par exemple un processeur, couplée à un ensemble de mémoires, l'unité de calcul comportant des moyens d'analyse configurés pour effectuer une analyse d'un jeu de paramètres initiaux définissant un réseau de neurones multicouches initial destiné à être mis en oeuvre par ledit système, les moyens d'analyse étant configurés pour, en particulier en vue d'obtenir une amélioration technique comportant par exemple au moins une amélioration de la durée de traitement de l'unité de calcul et/ou un gain de taille mémoire, réduire ou tenter de réduire la taille mémoire initiale d'au moins un paramètre initial de façon à obtenir un jeu de paramètres modifiés définissant un réseau de neurones modifié par rapport au réseau initial.

Les moyens d'analyse sont avantageusement configurés pour conditionner la réduction ou la tentative de réduction de la taille mémoire initiale d'au moins un paramètre initial, à la satisfaction ou non d'un critère.

Selon un mode de réalisation, l'unité de calcul est en outre configurée pour mettre en oeuvre le réseau de neurones initial et le réseau de neurones modifié en utilisant un jeu de données d'entrée de test, et les moyens d'analyse sont configurés pour élaborer un facteur de qualité pour le réseau de neurones initial et un facteur de qualité pour le réseau de neurones modifié en utilisant ledit au moins un jeu de données d'entrée de test, pour effectuer une comparaison entre les deux facteurs de qualité, et pour délivrer une décision d'acceptation ou de refus de ladite réduction de la taille mémoire initiale dudit au moins un paramètre en fonction du résultat de ladite comparaison au regard de la satisfaction ou non du critère choisi.

Selon un mode de réalisation, chaque couche du réseau de neurones initial comprend au moins un poids initial appartenant au jeu de paramètres initiaux et ayant une taille mémoire initiale, les moyens d'analyse étant configurés pour effectuer une première réduction de la taille mémoire initiale dudit au moins un poids initial à une première taille mémoire pour toutes les couches, et en cas de refus de la première réduction après ladite comparaison par l'unité de calcul, les moyens d'analyse sont configurés pour effectuer une deuxième réduction dudit au moins un poids à une deuxième taille mémoire pour toutes les couches, la deuxième taille mémoire étant supérieure à la première taille mémoire, et en cas de refus de la deuxième réduction après ladite comparaison par l'unité de calcul, les moyens d'analyse sont configurés pour conserver la taille mémoire initiale des poids initiaux du réseau de neurones initial.

Selon un mode de réalisation, chaque couche du réseau de neurones initial comprend une zone mémoire initiale destinée à stocker des données de sortie, appartenant au jeu de paramètres initiaux et ayant une taille mémoire initiale, les moyens d'analyse étant configurés pour, si la taille mémoire initiale dudit au moins un poids initial a été réduite, effectuer une première réduction de la taille mémoire initiale de toutes les zones mémoires initiales à ladite première taille, et en cas de refus de la première réduction après ladite comparaison par l'unité de calcul, les moyens d'analyse sont configurés pour effectuer une deuxième réduction de la taille mémoire initiale de toutes les zones mémoires initiales à la deuxième taille, et en cas de refus de la deuxième réduction après ladite comparaison par l'unité de calcul, les moyens d'analyse sont configurés pour conserver la taille mémoire initiale des zones mémoires initiales.

Selon un mode de réalisation, la deuxième taille peut être le double de la première taille.

Selon un mode de réalisation, le jeu de paramètres modifiés du réseau de neurones modifié comprend ledit au moins un poids ayant une taille mémoire réduite et toutes les zones mémoires initiales ayant une taille mémoire réduite.

Selon un mode de réalisation, le jeu de paramètres modifié du réseau de neurones modifié comprend ledit au moins un poids ayant une taille mémoire réduite et toutes les zones mémoires initiales ayant leur taille mémoire initiale.

Selon un mode de réalisation, ledit au moins un facteur de qualité est la précision.

Selon un mode de réalisation, ledit au moins un facteur de qualité est le bruit.

Selon un mode de réalisation, chaque couche du réseau de neurones initial comprend au moins un poids initial appartenant au jeu de paramètres initiaux et ayant une taille mémoire initiale, les moyens d'analyse étant configurés pour effectuer une première réduction de la taille mémoire dudit au moins un poids de ladite couche à une première taille mémoire, et en cas de refus de la première réduction après ladite comparaison par l'unité de calcul, les moyens d'analyse sont configurés pour effectuer une deuxième réduction de la taille mémoire initiale dudit au moins un poids initial de ladite couche à une deuxième taille mémoire supérieure à la première taille mémoire, et en cas de refus de la deuxième réduction après ladite comparaison par l'unité de calcul, les moyens d'analyse sont configurés pour conserver la taille mémoire initiale dudit au moins un poids de la couche.

Par ailleurs chaque couche du réseau de neurones initial comprenant une zone mémoire initiale destinée à stocker des données de sortie, appartenant au jeux de paramètres initiaux et ayant une taille mémoire initiale, les moyens d'analyse sont également configurés pour effectuer une première réduction de la taille mémoire initiale de la zone mémoire initiale de la couche à ladite première taille, et en cas de refus de la première réduction après ladite comparaison par l'unité de calcul, les moyens d'analyse sont configurés pour effectuer une deuxième réduction de la taille mémoire initiale de la zone mémoire initiale de la couche à la deuxième taille, et en cas de refus de la deuxième réduction après ladite comparaison par l'unité de calcul, les moyens d'analyse sont configurés pour conserver la taille mémoire initiale de la zone mémoire initiale et de la taille mémoire initiale dudit au moins un poids initial de la couche.

Selon un mode de réalisation, chaque couche du réseau de neurones initial comprend au moins un poids initial et une zone mémoire initiale destinée à stocker des données de sortie, appartenant au jeu de paramètres initiaux, ledit au moins un poids ayant une taille mémoire initiale égale à la taille mémoire initiale de la zone mémoire initiale, les moyens d'analyse étant configurés pour effectuer une réduction de moitié de la taille mémoire initiale dudit au moins un poids initial de ladite couche, et en cas de refus de ladite réduction après ladite comparaison par l'unité de calcul, les moyens d'analyse sont configurés pour conserver la taille mémoire initiale dudit au moins un poids initial et pour effectuer une réduction de moitié de la taille mémoire initiale de la zone mémoire initiale, et en cas de refus de la réduction de la taille mémoire initiale de la zone mémoire initiale après ladite comparaison, les moyens d'analyse sont configurés pour conserver la taille mémoire initiale de la zone mémoire initiale.

Selon un mode de réalisation, chaque couche du réseau de neurones initial comprend au moins un poids initial et une zone mémoire initiale destinée à stocker des données de sortie, appartenant au jeu de paramètres initiaux, ledit au moins un poids ayant une taille mémoire initiale supérieure à la taille mémoire initiale de la zone mémoire initiale, les moyens d'analyse étant configurés pour effectuer une réduction de la taille mémoire initiale dudit au moins un poids initial à la taille mémoire initiale de la zone mémoire initiale, et en cas de refus après ladite comparaison par l'unité de calcul, les moyens d'analyse sont configurés pour conserver la taille mémoire initiale dudit au moins un poids.

Selon un mode de réalisation, chaque couche du réseau de neurones initial comprend au moins un poids initial et une zone mémoire initiale destinée à stocker des données de sortie, appartenant au jeu de paramètres initiaux, ledit au moins un poids initial ayant une taille mémoire initiale inférieure à la taille mémoire initiale de la zone mémoire initiale, les moyens d'analyse étant configurés pour réduire la taille mémoire initiale de la zone mémoire initiale à la taille mémoire initiale dudit au moins un poids initial, et en cas de refus de la réduction après ladite comparaison par l'unité de calcul, les moyens d'analyse sont configurés pour conserver la taille mémoire initiale de la zone mémoire initiale.

Selon un mode de réalisation, les moyens d'analyse sont configurés pour traiter les couches du réseau de neurones initial de la première à la dernière couche et/ou de la dernière à la première couche.

Selon un mode de réalisation, ledit au moins un facteur de qualité comprend un facteur de précision.

Selon un mode de réalisation, ledit au moins un facteur de qualité e comprend un facteur de bruit.

Selon un mode de réalisation, l'unité de calcul est configurée pour calculer un score pour chaque couche du réseau de neurones initial en fonction de l'amélioration technique recherchée et pour sélectionner les couches ayant un score au-dessus d'un seuil.

Selon un mode de réalisation, chaque couche sélectionnée par les moyens d'analyse, comprend au moins un poids ayant une taille mémoire initiale et une zone mémoire initiale destinée à stocker des données de sortie et ayant une taille mémoire initiale, les moyens d'analyse étant configurés pour effectuer la réduction de la taille mémoire initiale de la zone mémoire initiale et/ou dudit au moins un poids de la couche sélectionnée à une taille choisie, et en cas de refus de ladite réduction après ladite comparaison par l'unité de calcul, les moyens d'analyse sont configurés pour conserver la taille mémoire initiale dudit au moins un poids initial et/ou de la zone mémoire initiale, et pour passer à la couche sélectionnée suivante.

Selon un mode de réalisation, l'amélioration technique recherchée est un gain dans l'ensemble de mémoires.

Selon un mode de réalisation, l'ensemble de mémoires du système comporte une mémoire volatile destinée à être allouée à la zone mémoire initiale de la couche sélectionnée et une mémoire non volatile destinée à stocker ledit au moins un poids de la couche sélectionnée, et en fonction d'un facteur de pondération, le gain en mémoire comprend un gain en mémoire volatile ou non volatile ou un gain dans les deux mémoires, le gain en mémoire non-volatile correspondant à une réduction de la taille mémoire initiale dudit au moins un poids de la couche sélectionnée par les moyens d'analyse, le gain en mémoire volatile correspondant à une réduction de la taille mémoire initiale de la zone mémoire initiale de la couche sélectionnée par les moyens d'analyse.

Selon un mode de réalisation, l'amélioration technique recherchée est un gain en temps de traitement.

Selon un mode de réalisation, ledit au moins un facteur de qualité comprend un facteur de précision.

Selon un mode de réalisation, ledit au moins un facteur de qualité comprend un facteur de bruit.

Selon un autre aspect, il est également proposé un microcontrôleur comprenant ledit système tel que défini ci-avant.

[fig.1] illustre schématiquement un mode de mise en oeuvre et de réalisation de l'invention.
[fig.2] illustre schématiquement un mode de mise en oeuvre et de réalisation de l'invention.
[fig.3A] illustre schématiquement un mode de mise en oeuvre et de réalisation de l'invention.
[fig.3B] illustre schématiquement un mode de mise en oeuvre et de réalisation de l'invention.
[fig.3C] illustre schématiquement un mode de mise en oeuvre et de réalisation de l'invention.
[fig.3D] illustre schématiquement un mode de mise en oeuvre et de réalisation de l'invention.
[fig.4A] illustre schématiquement un mode de mise en oeuvre et de réalisation de l'invention.
[fig.4B] illustre schématiquement un mode de mise en oeuvre et de réalisation de l'invention.

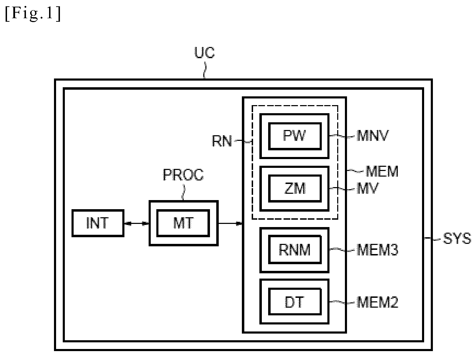

Sur la figure 1, la référence UC désigne un objet électronique par exemple un microcontrôleur, un générateur de code ou tout autre objet pouvant contenir une architecture logicielle embarquée ou matérielle.

L'objet UC comprend un système SYS par exemple un module configuré pour implanter un réseau de neurones initial RN, et comprenant un ensemble de mémoires MEM, une unité de calcul (ici un processeur) PROC et une interface utilisateur INT.

L'ensemble de mémoires MEM est couplé au processeur PROC et comprend une mémoire non volatile MNV par exemple une mémoire ROM (« Read-Only Memory » en anglais). Ladite mémoire non volatile est configurée pour stocker la configuration du réseau du neurone RN par exemple les différentes couches le caractérisant et ses poids PW.

L'ensemble de mémoires MEM comprend également une mémoire volatile MV par exemple une mémoire RAM (pour « Random Access Memory » en anglais). La mémoire volatile MV est configurée pour stocker des zones mémoires initiales ZM destinés à contenir les données de sortie de chaque couche du réseau de neurones initial RN.

Les poids PW et les zones mémoires initiales représentent un jeu de paramètres initiaux du réseau de neurones initial RN.

L'ensemble de mémoires MEM comprend également une mémoire MEM3 configurée pour stocker les données relatives à un jeu de paramètres modifiés d'un réseau de neurones modifié RNM.

Une fois la modification de la configuration du réseau de neurones modifié RNM terminée, le processeur PROC est configuré pour stocker le jeu de paramètres modifiés du réseau de neurones modifié RNM à la place du jeu de paramètres initiaux du réseau de neurones initial RN.

Il comprend une mémoire MEM2 configurée pour stocker un jeu de données d'entrée de test DT par exemple une mémoire non-volatile ROM.

Le jeu de données d'entrée de test est configuré pour évaluer la performance du réseau de neurones initial RN ou la performance du réseau de neurones modifié RNM en calculant un facteur de qualité.

Le processeur PROC comprend des moyens d'analyse MT, réalisés par exemple sous forme logicielle, configurés pour effectuer une analyse du jeu de paramètres initiaux définissant le réseau de neurones RN, réduire la taille mémoire initiale d'au moins un paramètre initial du réseau de neurones RN et obtenir ledit jeu de paramètres modifiés définissant le réseau de neurones modifié RNM.

Les moyens d'analyse MT sont configurés pour effectuer ladite réduction en vue d'obtenir une amélioration technique, par exemple une amélioration de la durée de traitement du processeur PROC et/ou un gain de taille mémoire de l'ensemble des mémoires MEM.

A cet égard les moyens d'analyse MT sont configurés pour calculer le facteur de qualité pour le réseau initial et le facteur de qualité pour le réseau modifié et pour comparer ces deux facteurs de qualité.

Le refus ou l'acceptation de ladite réduction de la taille mémoire d'au moins un paramètre initial du réseau initial va dépendre du résultat de ladite comparaison au regard de la satisfaction ou non d'un critère avantageusement choisi par l'utilisateur du réseau de neurones.

Ainsi, si par exemple les deux facteurs de qualité sont identiques à une tolérance près, par exemple quelques pourcents, alors on considère que le critère est satisfait, c'est-à-dire que le réseau de neurones modifié permet par exemple un gain en mémoire tout en conservant sensiblement les mêmes performances que le réseau de neurones initial.

Si par contre les deux facteurs de qualité ne sont pas identiques à ladite tolérance près, alors on considère que le critère n'est pas satisfait, c'est-à-dire que le gain en mémoire par exemple, obtenu avec le réseau de neurones modifié ne permet pas d'obtenir les mêmes performances que celles obtenues avec le réseau de neurones initial.

Cette tolérance, qui intervient dans la détermination de la satisfaction ou de la non satisfaction du critère (avantageusement choisi par l'utilisateur), est donc également avantageusement choisie par l'utilisateur.

Le processeur PROC est couplé à l'interface utilisateur INT configurée pour permettre à l'utilisateur de choisir le critère, c'est-à-dire ici de délivrer au système la valeur de ladite tolérance.

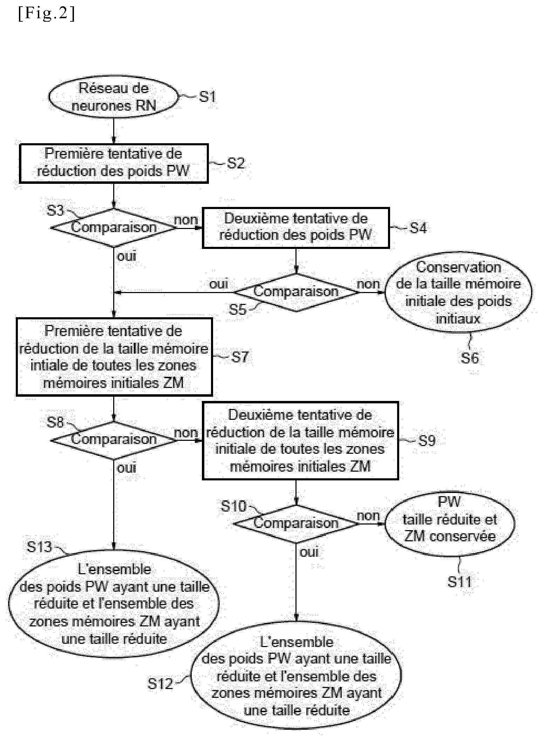

La figure 2 représente un algorithme d'analyse du jeu de paramètres initiaux définissant le réseau de neurones RN.

Dans l'étape S1, le processeur PROC extrait le jeu de paramètres initiaux du réseau de neurones RN par exemple les poids PW de toutes les couches.

Les moyens d'analyse MT effectuent une première réduction de la taille mémoire initiale des poids PW du réseau de neurones RN dans l'étape S2.

Par exemple, si ladite taille mémoire initiale des poids PW est de 32 bits, les moyens d'analyse MT réduisent ladite taille initiale de 24 bits. Les poids PW ont donc chacun une nouvelle première taille mémoire de 8 bits. En modifiant le jeu de paramètres initiaux du réseau de neurones, le réseau de neurones est donc modifié.

Dans l'étape S3, le processeur PROC met en oeuvre le réseau de neurones modifié RNM en utilisant le jeu de données d'entrée de test DT de sorte à élaborer un facteur de qualité par exemple la précision (« Mean Average Précision » en anglais). On obtient par exemple une précision de 90%. On peut également élaborer un autre facteur de qualité par exemple « accuracy » connu de l'homme du métier.

Le processeur PROC compare dans l'étape S3 le facteur de qualité élaboré avec un autre facteur de qualité préalablement élaboré lors de la mise en oeuvre du réseau de neurones initial RN par exemple 95%. Il y a donc une différence de 5% entre les deux facteurs de qualité.

Si cette différence se situe dans la tolérance fixée par l'utilisateur via l'interface INT, le critère est satisfait et on passe à l'étape S7 de l'algorithme sinon on passe à l'étape S4.

Dans l'étape S4, les moyens d'analyse MT effectuent une deuxième réduction de la taille mémoire initiale des poids PW pour obtenir par exemple une deuxième taille mémoire supérieure à la première taille mémoire, par exemple 16 bits.

Dans l'étape S5, le processeur PROC met en oeuvre le réseau de neurones modifié en utilisant ledit jeu de données d'entrée de test DT de sorte à élaborer un facteur de qualité par exemple la précision. On obtient par exemple une précision de 92%.

Le processeur PROC compare le facteur de qualité élaboré avec un autre facteur de qualité préalablement élaboré lors de la mise en oeuvre du réseau de neurones initial RN par exemple 95%. Il y a donc une différence de 3%.

Si cette différence se situe dans la tolérance fixée par l'utilisateur via l'interface INT (par exemple +/- 3%), le critère est satisfait et on passe à l'étape S7 de l'algorithme sinon le processeur PROC conserve la taille mémoire initiale des poids PW et donc conserve le réseau de neurones initial RN.

Dans l'étape S7, après réduction des poids PW, les moyens d'analyse MT effectuent une première réduction de la taille mémoire des zones mémoires ZM destinées à stocker les données de sortie de chaque couche du réseau de neurones RN.

Par exemple, si ladite taille mémoire initiale de la zone mémoire initiale ZM est de 32 bits, les moyens d'analyse MT réduisent ladite taille initiale de 24 bits. Les zones mémoires initiales ZM ont donc chacune une nouvelle première taille mémoire de 8 bits. En modifiant le jeu de paramètres initiaux du réseau de neurones RN, le réseau de neurones est donc modifié.

Dans l'étape S8, le processeur PROC met en oeuvre le réseau de neurones modifié RNM en utilisant le jeu de données d'entrée de test DT de sorte à élaborer un facteur de qualité par exemple la précision. On obtient par exemple une précision de 90%.

Le processeur PROC compare dans l'étape S8 le facteur de qualité élaboré avec un autre facteur de qualité préalablement élaboré lors de la mise en oeuvre du réseau de neurones initial RN par exemple 95%. Il y a donc une différence de 5%.

Si cette différence se situe dans la tolérance fixée par l'utilisateur via l'interface INT, le critère est satisfait et le processeur PROC remplace dans l'étape S13 le réseau de neurones RN par le réseau de neurones modifié RNM dans lequel l'ensemble de ses poids PW et l'ensemble des zones mémoires ZM ont leur taille initiale modifiée. Sinon, on passe à l'étape S9.

Dans l'étape S9, les moyens d'analyse MT effectuent une deuxième réduction de la taille mémoire initiale de la zone mémoire initiale ZM pour obtenir par exemple une deuxième taille mémoire de 16 bits, supérieure à la première taille mémoire (8bits).

Dans l'étape S10, le processeur PROC met en oeuvre le réseau de neurones modifié en utilisant ledit jeu de données d'entrée de test DT de sorte à élaborer un facteur de qualité par exemple la précision. On obtient par exemple une précision de 92%.

Le processeur PROC compare le facteur de qualité élaboré avec un autre facteur de qualité préalablement élaboré lors de la mise en oeuvre du réseau de neurones initial RN par exemple 95%. Il y a donc une différence de 3%.

Si cette différence se situe dans la tolérance fixée par l'utilisateur via l'interface INT (par exemple +/- 3%), le critère est satisfait et le processeur PROC remplace dans l'étape S12 le jeu de paramètres initiaux par le nouveau jeu de paramètres modifiés.

Sinon, le processeur PROC conserve la taille mémoire initiale des zones mémoires initiales ZM et remplace les poids initiaux PW par les nouveaux poids ayant ladite taille réduite dans l'étape S11.

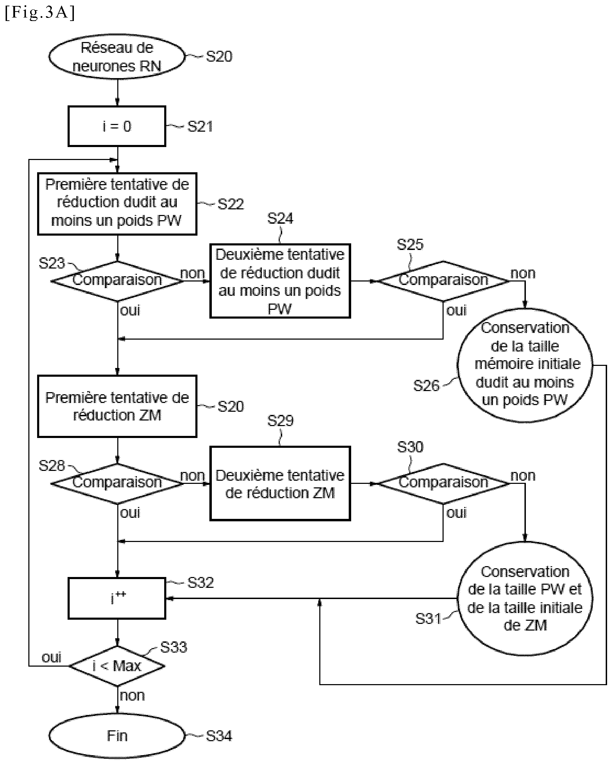

La figure 3A représente une alternative à l'algorithme d'analyse du jeu de paramètres initiaux définissant le réseau de neurones RN.

Dans l'étape S20, le processeur PROC extrait les couches du réseau neurones initial RN.

La variable i que le processeur PROC initialise à 0 à l'étape S21 représente le numéro de couche.

Dans l'étape S22, les moyens d'analyse MT effectuent une première réduction de la taille mémoire initiale des poids PW de la première couche (i = 0) du réseau de neurones initial RN pour obtenir par exemple une première taille mémoire de 8 bits.

Le processeur PROC met en oeuvre le réseau de neurones modifié RNM avec ledit jeu de données d'entrée de test DT dans l'étape S23 et élabore un facteur de qualité par exemple une précision de 80%.

Il compare ensuite ledit facteur de qualité avec un autre facteur de qualité préalablement élaboré lors de la mise en oeuvre du réseau de neurones initial RN par exemple une précision de 95%. Il y a donc une différence de 15%.

Si cette différence se situe dans la tolérance fixée par l'utilisateur via l'interface INT (par exemple +/- 15%), le critère est satisfait et le processeur PROC passe à l'étape S20 sinon à l'étape S24.

Dans l'étape S24, les moyens d'analyse MT réduisent la taille initiale des poids de la couche i pour obtenir une deuxième taille mémoire, supérieure à la première taille mémoire, par exemple 16 bits. La deuxième taille mémoire représente donc ici le double de la première taille mémoire.

Dans l'étape S25, le processeur PROC met en oeuvre le réseau de neurones modifié RNM pour élaborer un facteur de qualité par exemple une précision de 90%. Il y a donc une différence de 5%.

Si cette différence se situe dans la tolérance fixée par l'utilisateur via l'interface INT (par exemple +/- 6%), le critère est satisfait et le processeur PROC passe à l'étape S20 sinon les moyens d'analyse MT conservent la taille mémoire initiale des poids PW de la couche i et passent à la couche suivante en incrémentant la valeur de i à l'étape S32. Si dans l'étape S33, la valeur de la variable i est supérieure à une variable Max représentant le nombre maximum de couche, cela veut dire que le processeur PROC a parcouru toutes les couches (S34).

Dans l'étape S20, les moyens d'analyse MT réduisent la taille de la zone mémoire ZM destinée à stocker les données de sortie de la couche i à une première taille par exemple 8 bits.

Dans l'étape S28, le processeur PROC met en oeuvre le réseau de neurones modifié RNM pour élaborer un facteur de qualité par exemple la précision et le comparer au facteur de qualité préalablement élaboré lors de la mise en oeuvre du réseau de neurones initial RN.

Si la différence entre les deux facteurs de qualité se situe dans la tolérance fixée par l'utilisateur via l'interface INT, le critère est satisfait et le processeur PROC passe à l'étape S32 sinon à l'étape S29.

Dans l'étape S29, les moyens d'analyse MT réduisent la taille mémoire initiale de la zone mémoire initiale ZM pour obtenir une deuxième taille mémoire par exemple de 16 bits. La deuxième taille mémoire représente le double de la première taille mémoire.

Dans l'étape S30, le processeur PROC met en oeuvre le réseau de neurones modifié RNM pour élaborer un facteur de qualité par exemple la précision.

Si la différence entre les deux facteurs de qualité se situe dans la marge de tolérance fixée par l'utilisateur via l'interface, le critère est satisfait et le processeur PROC passe à l'étape S32 sinon les moyens d'analyse MT conservent dans l'étape S31 la taille mémoire initiale de la zone mémoire initiale ZM et la taille mémoire initiale des poids PW et passent à la couche suivante en incrémentant la valeur de i à l'étape S32.

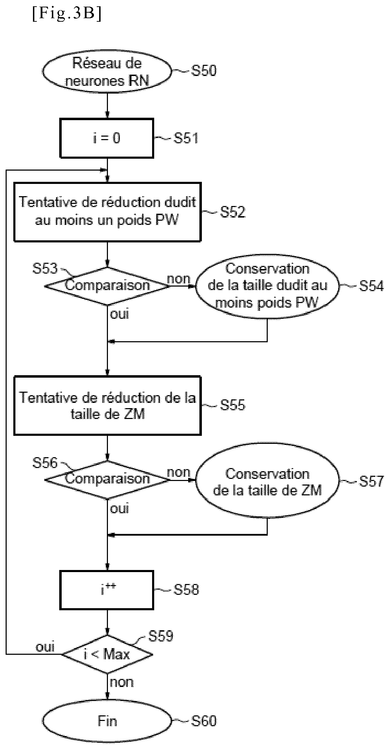

La figure 3B représente une alternative à l'algorithme d'analyse du jeu de paramètres initiaux définissant le réseau de neurones RN.

Dans l'étape S50, le processeur PROC extrait les couches du réseau neurones initial RN.

La variable i que le processeur PROC initialise à 0 à l'étape S51 représente le numéro de couche.

Ici, la taille mémoire initiale des poids de la couche i et la taille mémoire initiale de la zone mémoire de la couche i sont égales par exemple 16 bits.

Dans l'étape S52, les moyens d'analyse MT effectuent une réduction de la taille mémoire initiale des poids PW de la première couche (i = 0) du réseau de neurones initial RN pour obtenir par exemple une taille mémoire de 8 bits.

Dans l'étape S53, le processeur PROC met en oeuvre le réseau de neurones modifié RNM pour élaborer un facteur de qualité par exemple la précision et le compare au facteur de qualité élaboré préalablement en mettant en oeuvre le réseau de neurones initial RN.

Si la différence entre les deux facteurs de qualité se situe dans la tolérance fixée par l'utilisateur via l'interface INT, le critère est satisfait et le processeur PROC passe à l'étape S55 sinon les moyens d'analyse MT conservent dans l'étape S54 la taille mémoire initiale des poids PW de la couche i et passent à l'étape S55.

Dans l'étape S55, les moyens d'analyse MT effectuent une réduction de la taille mémoire initiale de la zone mémoire initiale ZM de la première couche i du réseau de neurones initial RN pour obtenir par exemple une première taille mémoire de 8 bits.

Dans l'étape S56, le processeur PROC met en oeuvre le réseau de neurones modifié RNM pour élaborer un facteur de qualité par exemple la précision et le compare au facteur de qualité élaboré préalablement en mettant en oeuvre le réseau de neurones initial RN.

Si la différence entre les deux facteurs de qualité se situe dans la marge de tolérance fixée par l'utilisateur via l'interface INT, le critère est satisfait et le processeur PROC passe à l'étape S58 sinon les moyens d'analyse MT conservent dans l'étape S57 la taille mémoire initiale de la zone mémoire initiale ZM de la couche i et passent à l'étape S58.

Dans l'étape S58, on incrémente la variable i de 1 pour passer à la couche suivante et si dans l'étape S59 la valeur de i est supérieure à la valeur de la variable Max qui représente le nombre maximal de couches, le processeur PROC passe à l'étape S60 qui marque la fin de l'algorithme sinon à l'étape S52.

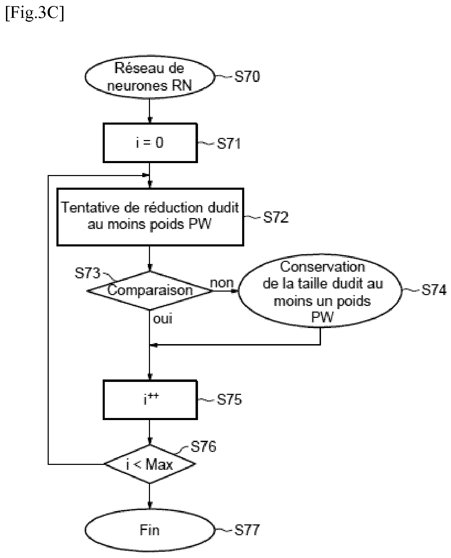

La figure 3C représente une autre alternative à l'algorithme d'analyse du jeu de paramètres initiaux définissant le réseau de neurones RN.

Dans l'étape S70, le processeur PROC extrait les couches du réseau neurones initial RN.

La variable i que le processeur PROC initialise à 0 à l'étape S71 représente le numéro de couche.

Ici, la taille mémoire initiale des poids de la couche i est supérieure à la taille mémoire initiale de la zone mémoire ZM de la même couche i.

Dans l'étape S72, les moyens d'analyse MT effectuent une réduction de la taille mémoire initiale des poids PW de la première couche i du réseau de neurones initial RN pour obtenir par exemple une taille mémoire de 8 bits égale à la taille mémoire initiale de la zone mémoire initiale ZM.

Dans l'étape S73, le processeur PROC met en oeuvre le réseau de neurones modifié RNM pour élaborer un facteur de qualité par exemple la précision et le compare au facteur de qualité élaboré préalablement en mettant en oeuvre le réseau de neurones initial RN.

Si la différence entre les deux facteurs de qualité se situe dans la tolérance fixée par l'utilisateur via l'interface, le critère est satisfait et le processeur PROC passe à l'étape S75 sinon les moyens d'analyse MT conservent dans l'étape S74 la taille mémoire initiale des poids PW de la couche i puis passent à l'étape S75.

Dans l'étape S75, le processeur PROC incrémente la valeur de i de 1 pour passer à la couche suivante et si dans l'étape S76, la valeur de la variable i est supérieure à la valeur de la variable Max définie plus haut, le processeur PROC met fin à l'algorithme dans l'étape S77. Sinon, on répète les différentes étapes de l'algorithme à partir de l'étape S72 pour la couche suivante.

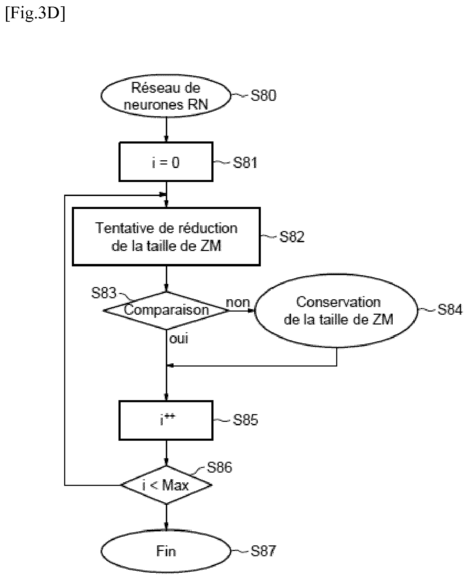

La figure 3D représente une autre alternative à l'algorithme d'analyse du jeu de paramètres initiaux définissant le réseau de neurones RN.

Dans l'étape S80, le processeur PROC extrait les couches du réseau neurones initial RN.

La variable i que le processeur PROC initialise à 0 à l'étape S81 représente le numéro de couche.

Ici, la taille mémoire initiale des poids de la couche i est inférieure à la taille mémoire initiale de la zone mémoire ZM de la même couche i.

Dans l'étape S82, les moyens d'analyse MT effectuent une réduction de la taille mémoire initiale de la zone mémoire ZM de la première couche i du réseau de neurones initial RN pour obtenir par exemple une taille mémoire de 8 bits égale à la taille mémoire initiale des poids PW de la couche i.

Dans l'étape S83, le processeur PROC met en oeuvre le réseau de neurones modifié RNM pour élaborer un facteur de qualité par exemple la précision et le compare au facteur de qualité élaboré préalablement en mettant en oeuvre le réseau de neurones initial RN.

Si la différence entre les deux facteurs de qualité se situe dans la tolérance fixée par l'utilisateur via l'interface INT, le critère est satisfait et le processeur PROC passe à l'étape S85 sinon les moyens d'analyse MT conservent dans l'étape S84 la taille mémoire initiale de la zone mémoire initiale ZM de la couche i puis passent à l'étape S85.

Dans l'étape S85, le processeur PROC incrémente la valeur de i de 1 pour passer à la couche suivante et si dans l'étape S86, la valeur de la variable i est supérieure à la valeur de la variable Max définie plus haut, le processeur PROC met fin à l'algorithme dans l'étape S87. Sinon, on répète les différentes étapes de l'algorithme à partir de l'étape S82 pour la couche suivante.

Il est à noter que le processeur PROC peut traiter les couches des algorithmes présentés dans les figures 3A à 3C de la première à la dernière couche et/ou de la dernière à la première couche.

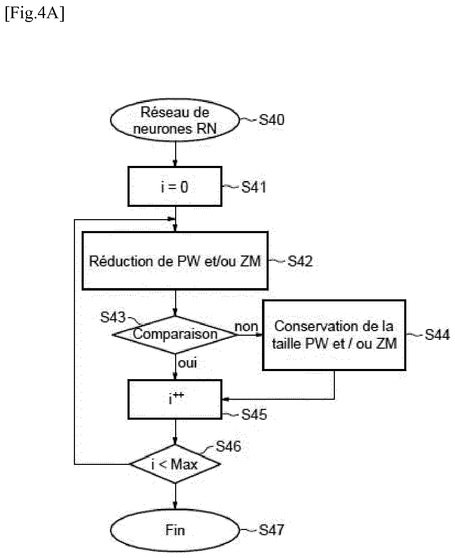

La figure 4A représente une autre alternative à l'algorithme d'analyse du jeu de paramètres initiaux définissant le réseau de neurones RN.

Dans l'étape S40, le processeur PROC extrait toutes les couches du réseau neurones initial RN. Les moyens d'analyse MT effectuent classifient les couches en fonction du ou des critères renseignés par l'utilisateur dans l'interface utilisateur INT.

Par exemple, si l'utilisateur souhaite un gain dans la mémoire volatile MV, il serait avantageux de réduire la taille mémoire initiale des zones mémoires ZM des couches potentielles.

S'il souhaite un gain dans la mémoire non volatile MNV, il serait avantageux de réduire la taille mémoire initiale des poids PW des couches potentielles.

L'utilisateur peut également renseigner dans l'interface utilisateur INT un facteur de pondération par exemple 0.5 si l'utilisateur confère la même importance au gain en mémoire volatile et en mémoire non volatile.

Aussi, si l'utilisateur choisit comme amélioration technique recherchée, un gain en temps de traitement par le processeur PROC, il est avantageux de réduire la taille mémoire initiale des poids PW de chaque couche et/ou la taille mémoire initiale des zones mémoires ZM de chaque couche.

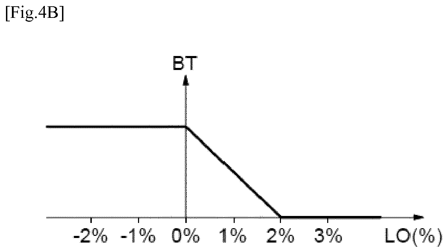

En fonction du type d'amélioration technique choisie, les moyens d'analyse MT effectuent un classement des couches potentielles (candidates). Un exemple de classement est expliqué dans la figure 4B.

La variable i que le processeur PROC initialise à 0 à l'étape S41 représente le nombre de couches potentielles.

Dans l'étape S42, en fonction du ou des types de gain (types d'amélioration technique) choisis par l'utilisateur, les moyens d'analyse MT réduisent la taille mémoire initiale des poids PW de la couche potentielle et/ou la taille mémoire initiale de la zone mémoire ZM par exemple à 8 bits.

A l'étape S43, le processeur PROC met en oeuvre le réseau de neurones modifié RNM et élabore un facteur de qualité par exemple la précision et le compare au facteur de qualité préalablement élaboré lors de la mise en oeuvre du réseau de neurones initial RN.

Si cette différence ne se situe pas dans la tolérance fixée par l'utilisateur via l'interface INT, le critère n'est pas satisfait et les moyens d'analyse MT conservent dans l'étape S44, la taille mémoire initial des poids de la couche potentielle i et/ou la taille mémoire initiale de la zone mémoire ZM de la couche potentielle i. Le processeur PROC passe ensuite à l'étape S45. Si non, il passe directement à l'étape S45 à partir de l'étape S43.

Dans l'étape S46, le processeur PROC incrémente la valeur de i de 1 pour passer à la couche potentielle suivante.

Si la valeur de la variable i est supérieure à la valeur de la variable Max dans l'étape S46, cela veut dire que le processeur PROC a analysé et traité toutes les couches potentielles et met donc fin à l'algorithme dans l'étape S47.

Si non, le processeur PROC passe à l'analyse du jeu de paramètres initiaux de la couche potentielle suivante et réitère les étapes de l'algorithme à partir de l'étape S42.

La figure 4B représente un graphe décrivant l'évolution d'une variable BT en fonction d'une autre variable LO en pourcentage.

La variable LO représente le pourcentage de perte de performances calculé en fonction du type de la couche.

Le pourcentage LO est déterminé par une tentative de réduction de la taille mémoire initiale des poids PW de la couche et/ou la taille mémoire initiale de la zone mémoire ZM et par la mise en oeuvre du réseau de neurones modifié RNM avec le jeu de données de test.

La valeur de la variable BT contribue au calcul d'un score associé à chaque couche. Le score permet de sélectionner les couches potentielles conduisant à un gain en mémoire ou à un gain en temps de traitement. Les couches potentielles seront classées suivant les scores calculés.

Pour calculer ledit score pour chaque couche dans le cas où l'utilisateur choisit le gain en mémoire, on peut utiliser la formule ci-dessous :

$$\text{score} = \text{BTx}(\text{Alph} \times \text{RAMG} + (1\text{-Alph})\text{xROMG})$$

La variable Alph correspond au facteur de pondération.

La variable RAMG correspond au gain en mémoire volatile exprimé en byte.

La variable ROMG correspond au gain en mémoire non-volatile exprimé en byte.

Pour chaque couche, si le pourcentage LO calculé est inférieur à 0, cela veut dire que la réduction de la taille mémoire initiale de la zone mémoire ZM et/ou des poids de ladite couche conduit à un gain en mémoire et potentiellement à un gain en performance. Dans ce cas, la variable BT vaut 1.

Si le pourcentage LO calculé est supérieur à 0, cela équivaut à une perte de performances. Mais si le pourcentage LO est également supérieur à la tolérance spécifiée par l'utilisateur (2% dans cet exemple), cela veut dire que le critère n'est pas satisfait. Dans ce cas, la variable BT vaut 0 et par conséquent le score sera de 0.

Si le pourcentage LO calculé est supérieur à 0 et inférieur à la tolérance spécifiée par l'utilisateur, la variable BT décroit linéairement en fonction de la variable LO selon la formule ci-dessous :

$$BT = 1 - (LO/MG)$$

Les scores sont classés par ordre décroissant et les couches ayant un score égal à 0 ne sont pas sélectionnées.

On peut utiliser d'autres formules mathématiques, connues par l'homme du métier, qui permettent de faire décroître la variable BT exponentiellement par exemple.

Pour calculer ledit score pour chaque couche dans le cas où l'utilisateur choisit le gain temps de traitement, on peut utiliser la formule ci-dessous :

$$score = BT \times CYG$$

La variable CYG correspond au gain en temps de traitement.

Pour chaque couche, si le pourcentage LO calculé est inférieur à 0, cela veut dire que la réduction de la taille mémoire initiale de la zone mémoire ZM et/ou des poids de ladite couche conduit potentiellement à un gain en performance. Dans ce cas, la variable BT vaut 1.

Si le pourcentage LO calculé est supérieur à 0, cela équivaut à une perte de performances. Mais si le pourcentage LO est également supérieur à la tolérance spécifiée par l'utilisateur, cela veut dire que le critère n'est pas satisfait. Dans ce cas, la variable BT vaut 0 et par conséquent le score sera de 0.

Si le pourcentage LO calculé est supérieur à 0 et inférieur à la tolérance spécifiée par l'utilisateur, la variable BT décroit linéairement en fonction de la variable LO selon la formule ci-dessous :

$$BT = 1 - (LO/MG)$$

Les scores sont classés par ordre décroissant et les couches ayant un score égal à 0 ne sont pas sélectionnées.

Par ailleurs, l'invention n'est pas limitée à ces modes de réalisation et de mise en oeuvre mais en embrasse toutes les variantes, par exemple on peut réduire la taille mémoire de la zone mémoire ou la taille mémoire des poids autant de fois qu'il est possible de le faire tant que le critère défini par l'utilisateur est satisfait.

**Revendications**

1. Procédé, comprenant une analyse d'un jeu de paramètres initiaux définissant un réseau de neurones multicouches initial (RN), le jeu de paramètres initiaux comprenant deux types de paramètres incluant des poids (PW) et des zones mémoires (ZM) destinées à contenir les données de sortie de chaque couche du réseau de neurones initial (RN), , le réseau de neurones (RN) étant destiné à être mis en oeuvre par un système (SYS) comportant une unité de calcul, par exemple un processeur (PROC), couplée à un ensemble de mémoires (MEM), ladite analyse comportant une réduction ou une tentative de réduction de la taille mémoire initiale d'au moins un paramètre initial de façon à obtenir un jeu de paramètres modifiés définissant un réseau de neurones modifié par rapport au réseau initial, une mise en oeuvre par le système (SYS), du réseau de neurones initial (RN) et du réseau de neurones modifié (RNM) en utilisant un jeu de données d'entrée de test (DT), une élaboration d'un facteur de qualité pour le réseau de neurones initial (RN) et d'un facteur de qualité pour le réseau de neurones modifié (RNM) en utilisant au moins le jeu de données d'entrée de test (DT), une comparaison entre les deux facteurs de qualité, et une acceptation ou un refus de la réduction de la taille mémoire initiale d'au moins un paramètre en fonction du résultat de la comparaison au regard de la satisfaction ou non d'un critère choisi,
ladite analyse comprenant :

- une première réduction (S2, S22) de la taille mémoire initiale d'au moins un paramètre initial d'un premier type de paramètres du jeu de paramètres initiaux à une première taille mémoire pour au moins une couche,
- une première comparaison (S3, S23) des facteurs de qualité,
- et en cas de refus de la première réduction (S2, S22) après la comparaison (S3, S23), au moins une deuxième réduction (S4, S24) de la taille mémoire initiale dudit au moins un paramètre initial du premier type de paramètres à une deuxième taille mémoire pour l'au moins une couche, la deuxième taille étant supérieure à la première taille,
- une deuxième comparaison (S5, S25) des facteurs de qualité pour chaque deuxième réduction,
- et en cas de refus de chaque deuxième réduction (S4, S24) après la deuxième comparaison des facteurs de qualité, une conservation (S6, S26) de la taille mémoire initiale dudit au moins un paramètre initial du premier type de paramètres du réseau de neurones initial (RN).

2. Procédé selon la revendication 1, comprenant en outre :

- une première réduction ou une tentative de réduction (S7, S27) de la taille mémoire initiale à une première taille d'au moins un paramètre initial d'un deuxième type de paramètres du jeu de paramètres initiaux de façon à obtenir un jeu de paramètres modifiés définissant un réseau de neurones modifié (RNM) par rapport au réseau initial, et
- une première élaboration, par le système (SYS), d'un facteur de qualité pour le réseau de neurones initial (RN) et d'un facteur de qualité pour le réseau de neurones modifié (RNM) en utilisant au moins un jeu de données d'entrée de test (DT),
- une première comparaison (S8, S28) entre les deux facteurs de qualité,
- en cas de refus de la première réduction (S7, S27), une deuxième réduction ou une tentative de réduction (S9, S29) dudit au moins un paramètre initial du deuxième type de paramètres à une deuxième taille mémoire, la deuxième taille étant supérieure à la première taille,
- une deuxième élaboration, par le système (SYS), d'un facteur de qualité pour le réseau de neurones initial (RN) et d'un facteur de qualité pour le réseau de neurones modifié (RNM) en utilisant au moins un jeu de données d'entrée de test (DT),
- une deuxième comparaison (S10, S30) entre les deux facteurs de qualité, et
- une conservation (S11, S31) de la taille mémoire initiale dudit au moins un paramètre initial du deuxième type de paramètres du réseau de neurones initial (RN) en cas de refus de la deuxième réduction (S9, S29).

3. Procédé selon l'une des revendications 1 ou 2, comprenant une extraction, par le processeur (PROC), du jeu de paramètres initiaux du réseau de neurones initial (RN), les réductions ou tentatives de réductions (S2, S4) étant faites pour toutes les couches du réseau de neurones initial à la fois.

4. Procédé selon l'une des revendications 1 ou 2, comprenant une extraction, par le processeur (PROC), d'extraction des couches du réseau neurones initial (RN), les réductions ou tentatives de réductions (S22, S24) étant successivement faites pour une couche du réseau de neurones initial à la fois.

5. Procédé selon l'une des revendications 1 à 4, dans lequel à l'issue de ladite analyse, le jeu de paramètres modifiés du réseau de neurones modifié comprend ledit au moins un poids (PW) ayant une taille mémoire réduite et toutes les zones mémoires initiales ayant une taille mémoire réduite.

6. Procédé selon l'une des revendications 1 à 4, dans lequel le jeu de paramètres modifié du réseau de neurones modifié (RNM) comprend ledit au moins un poids (PW) ayant une taille mémoire réduite et toutes les zones mémoires initiales (ZM) ayant leur taille mémoire initiale.

7. Procédé selon l'une des revendications précédentes, comprenant en outre un calcul d'un score pour chaque couche du réseau de neurones initial (RN) en fonction d'une amélioration technique recherchée et une sélection des couches ayant un score au-dessus d'un seuil.

8. Procédé selon la revendication 7, dans lequel l'ensemble de mémoires (MEM) du système (SYS) comporte une mémoire volatile (MV) destinée à être allouée à la zone mémoire initiale (ZM) de la couche sélectionnée et une mémoire non volatile (MNV) destinée à stocker ledit au moins un poids (PW) de la couche sélectionnée, et en fonction d'un facteur de pondération, l'amélioration technique étant un gain en mémoire comprenant un gain en mémoire volatile (MV) ou non-volatile (MNV) ou un gain dans les deux mémoires, le gain en mémoire non-volatile (MNV) correspondant à une réduction de la taille mémoire initiale dudit au moins un poids (PW) de la couche sélectionnée, le gain en mémoire volatile correspondant à une réduction de la taille mémoire initiale de la zone mémoire initiale (ZM) de la couche sélectionnée.

9. Système (SYS), comprenant une unité de calcul, par exemple un processeur (PROC), couplée à un ensemble de mémoires (MEM), l'unité de calcul (PROC) comportant des moyens d'analyse (MT) configurés pour effectuer une analyse d'un jeu de paramètres initiaux définissant un réseau de neurones multicouches initial (RN) destiné à être mis en oeuvre par ledit système (SYS), le jeu de paramètres initiaux comprenant deux types de paramètres incluant des poids (PW) et des zones mémoires (ZM) destinées à contenir les données de sortie de chaque couche du réseau de neurones initial (RN), les moyens d'analyse (MT) étant configurés pour réduire ou tenter de réduire la taille mémoire initiale d'au moins un paramètre initial de façon à obtenir un jeu de paramètres modifiés définissant un réseau de neurones modifié (RNM) par rapport au réseau initial (RN),
système dans lequel l'unité de calcul (PROC) est en outre configurée pour mettre en oeuvre le réseau de neurones initial et le réseau de neurones modifié (RNM) en utilisant un jeu de données d'entrée de test (DT), pour élaborer un facteur de qualité pour le réseau de neurones initial (RN) et un facteur de qualité pour le réseau de neurones modifié (RNM) en utilisant ledit au moins un jeu d'entrées de test (DT), pour effectuer une comparaison entre les deux facteurs de qualité, et pour délivrer une décision d'acceptation ou de refus de ladite réduction de la taille mémoire initiale dudit au moins un paramètre en fonction du résultat de ladite comparaison au regard de la satisfaction ou non d'un critère choisi,
système dans lequel les moyens d'analyse (MT) sont configurés pour effectuer :

- une première réduction (S2, S22) de la taille mémoire initiale d'au moins un paramètre initial d'un premier type de paramètres du jeu de paramètres initiaux à une première taille mémoire pour au moins une couche,
- une première comparaison (S3, S23) des facteurs de qualité,
- et en cas de refus de la première réduction (S2, S22) après la comparaison (S3, S23), au moins une deuxième réduction (S4, S24) de la taille mémoire initiale dudit au moins un paramètre initial du premier type de paramètres à une deuxième taille mémoire pour l'au moins une couche, la deuxième taille étant supérieure à la première taille,
- une deuxième comparaison (S5, S25) des facteurs de qualité pour chaque deuxième réduction,
- et en cas de refus de chaque deuxième réduction (S4, S24) après la deuxième comparaison des facteurs de qualité, une conservation (S6, S26) de la taille mémoire initiale dudit au moins un paramètre initial du premier type de paramètres du réseau de neurones initial (RN).

**10.** Système selon la revendication 9, dans lequel les moyens d'analyse (MT) sont configurés pour effectuer :

- une première réduction ou une tentative de réduction (S7, S27) de la taille mémoire initiale à une première taille d'au moins un paramètre initial d'un deuxième type de paramètres du jeu de paramètres initiaux de façon à obtenir un jeu de paramètres modifiés définissant un réseau de neurones modifié (RNM) par rapport au réseau initial, et
- une première élaboration, par le système (SYS), d'un facteur de qualité pour le réseau de neurones initial (RN) et d'un facteur de qualité pour le réseau de neurones modifié (RNM) en utilisant au moins un jeu de données d'entrée de test (DT),
- une première comparaison (S8, S28) entre les deux facteurs de qualité,
- en cas de refus de la première réduction (S7, S27), une deuxième réduction ou une tentative de réduction (S9, S29) dudit au moins un paramètre initial du deuxième type de paramètres à une deuxième taille mémoire, la deuxième taille étant supérieure à la première taille,
- une deuxième élaboration, par le système (SYS), d'un facteur de qualité pour le réseau de neurones initial (RN) et d'un facteur de qualité pour le réseau de neurones modifié (RNM) en utilisant au moins un jeu de données d'entrée de test (DT),
- une deuxième comparaison (S10, S30) entre les deux facteurs de qualité, et
- une conservation (S11, S31) de la taille mémoire initiale dudit au moins un paramètre initial du deuxième type de paramètres du réseau de neurones initial (RN) en cas de refus de la deuxième réduction (S9, S29).

**11.** Système selon l'une des revendications 9 ou 10, dans lequel le processeur (PROC) est configuré pour extraire le jeu de paramètres initiaux du réseau de neurones (RN), et pour effectuer les réductions ou tentatives de réductions (S2, S4) pour toutes les couches à la fois.

**12.** Système selon l'une des revendications 9 ou 10, dans lequel le processeur (PROC) est configuré pour extraire les couches du réseau neurones initial (RN), et pour effectuer les réductions ou tentatives de réductions (S22, S24) successivement pour une couche (i) à la fois.

**13.** Système (SYS) selon la revendication 12, dans lequel les moyens d'analyse (MT) sont configurés pour traiter les couches du réseau de neurones initial (RN) de la première à la dernière couche et/ou de la dernière à la première couche.

**14.** Système (SYS) selon l'une des revendications 9 à 13, dans lequel le jeu de paramètres modifiés du réseau de neurones modifié (RNM) comprend ledit au moins un poids (PW) ayant une taille mémoire réduite et toutes les zones mémoires initiales (ZM) ayant une taille mémoire réduite.

**15.** Système (SYS) selon l'une des revendications 9 à 14, dans lequel le jeu de paramètres modifié du réseau de neurones modifié comprend ledit au moins un poids (PW) ayant une taille mémoire réduite et toutes les zones mémoires initiales (ZM) ayant leur taille mémoire initiale.

16. Système (SYS) selon l'une des revendications précédentes, dans lequel l'unité de calcul (PROC) est configurée pour calculer un score pour chaque couche du réseau de neurones initial (RN) en fonction d'une amélioration technique recherchée et pour sélectionner les couches ayant un score au-dessus d'un seuil.

17. Dispositif tel qu'un microcontrôleur (UC) comprenant un système selon les revendications 9 à 16.

[Fig.1]

[Fig.2]

[Fig.3A]

```
        ┌─────────────┐
        │  Réseau de  │──── S20
        │ neurones RN │
        └──────┬──────┘
               │
        ┌──────┴──────┐
        │   i = 0     │──── S21
        └──────┬──────┘
               │
      ┌────────┴─────────┐
      │ Première tentative de │──── S22
      │  réduction dudit au   │
      │  moins un poids PW    │
      └────────┬─────────┘
```

Première tentative de réduction dudit au moins un poids PW ~ S22

S24
Deuxième tentative de réduction dudit au moins un poids PW

S23 Comparaison — non
oui

S25 Comparaison — non
oui

Conservation de la taille mémoire initiale dudit au moins un poids PW — S26

Première tentative de réduction ZM ~ S20

S29 Deuxième tentative de réduction ZM

S28 Comparaison — non
oui

S30 Comparaison — non
oui

Conservation de la taille PW et de la taille initiale de ZM — S31

i++ ~ S32

S33 i < Max
oui
non

Fin ~ S34

19

EP 3 660 748 A1

[Fig.3B]

Réseau de
neurones RN    ~S50

i = 0    ~S51

Tentative de réduction dudit
au moins un poids PW    ~S52

S53~ Comparaison —non→ Conservation
de la taille dudit au    ~S54
moins poids PW

oui

Tentative de réduction de la
taille de ZM    ~S55

S56~ Comparaison —non→ Conservation
de la taille de ZM    ~S57

oui

i**    ~S58

oui← i < Max    ~S59

non

Fin    ~S60

20

[Fig.3C]

```
        ┌─────────────────┐
        │   Réseau de     │──S70
        │  neurones RN    │
        └────────┬────────┘
                 │
        ┌────────▼────────┐
        │     i = 0       │──S71
        └────────┬────────┘
                 │
        ┌────────▼──────────────────┐
        │ Tentative de réduction dudit │──S72
        │   au moins poids PW        │
        └────────┬──────────────────┘
                 │
   S73       ┌───▼────┐  non   ┌──────────────────┐
     ╲───────┤Comparaison├─────►│   Conservation   │──S74
            └────┬───┘        │ de la taille dudit│
             oui │            │  moins un poids   │
                 │            │        PW         │
                 │            └─────────┬────────┘
                 │◄─────────────────────┘
        ┌────────▼────────┐
        │      i⁺⁺        │──S75
        └────────┬────────┘
                 │  ──S76
            ┌────▼────┐
            │ i < Max │
            └────┬────┘
                 │
        ┌────────▼────────┐
        │      Fin        │──S77
        └─────────────────┘
```

[Fig.3D]

Réseau de neurones RN — S80

i = 0 — S81

Tentative de réduction de la taille de ZM — S82

S83 — Comparaison — non — Conservation de la taille de ZM — S84

oui

i** — S85

S86 — i < Max

Fin — S87

[Fig.4A]

[Fig.4B]

Europäisches
Patentamt

European
Patent Office

Office européen
des brevets

**RAPPORT DE RECHERCHE EUROPEENNE**

Numéro de la demande

EP 19 21 1416

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/328647 A1 (LIN DEXU [US] ET AL) 10 novembre 2016 (2016-11-10) * abrégé * * alinéa [0002] - alinéa [0013] * * alinéa [0025] - alinéa [0058]; figures 1, 2 * * alinéa [0077] - alinéa [0088]; figures 4, 5 * * alinéa [0091] * | 1-17 | INV. G06N3/063 G06N3/04 G06N3/08 |
| X | EP 3 276 540 A2 (SAMSUNG ELECTRONICS CO LTD [KR]) 31 janvier 2018 (2018-01-31) * abrégé * * alinéa [0001] - alinéa [0002] * * alinéa [0069] - alinéa [0078]; figures 1-2 * * alinéa [0086] - alinéa [0093]; figures 1, 2, 6, 11 * * alinéa [0124] - alinéa [0131]; figures 1-12 * | 1-17 | |
| X | DE BRUIN BARRY ET AL: "Quantization of Constrained Processor Data Paths Applied to Convolutional Neural Networks", 2018 21ST EUROMICRO CONFERENCE ON DIGITAL SYSTEM DESIGN (DSD), IEEE, 29 août 2018 (2018-08-29), pages 357-364, XP033420219, DOI: 10.1109/DSD.2018.00069 [extrait le 2018-10-12] * abrégé * * chapitres I-II; page 357 - page 358 * * chapitres IV-VI; page 359 - page 363; figures 4-7; tableaux I-IV * | 1-17 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 9 avril 2020 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

25

**ANNEXE AU RAPPORT DE RECHERCHE EUROPEENNE
RELATIF A LA DEMANDE DE BREVET EUROPEEN NO.**

EP 19 21 1416

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-04-2020

| Document brevet cité au rapport de recherche | Date de publication | Membre(s) de la famille de brevet(s) | Date de publication |
|---|---|---|---|
| US 2016328647 A1 | 10-11-2016 | CN 107646116 A<br>EP 3295382 A1<br>US 2016328647 A1<br>WO 2016182659 A1 | 30-01-2018<br>21-03-2018<br>10-11-2016<br>17-11-2016 |
| EP 3276540 A2 | 31-01-2018 | CN 107665364 A<br>EP 3276540 A2<br>US 2018032866 A1<br>US 2018032867 A1<br>US 2020005146 A1 | 06-02-2018<br>31-01-2018<br>01-02-2018<br>01-02-2018<br>02-01-2020 |

Pour tout renseignement concernant cette annexe : voir Journal Officiel de l'Office européen des brevets, No.12/82